# EUROPÄISCHE PATENTSCHRIFT

(11) **EP 0 445 403 B1**
(45) Veröffentlichungstag und Bekanntmachung des Hinweises auf die Patenterteilung: **05.10.1994**
(21) Anmeldenummer: 90124538.1
(22) Anmeldetag: 18.12.1990
(51) Int. Cl.: A22C 25/18, B26D 3/28, B26D 7/32

(54) **Vorrichtung zum Zerlegen von Schneidgut, vorzugsweise Fleischstücken, insbesondere Lachsseiten, in Scheiben**
Device for sectioning cutting material, especially pieces of meat, in particular sides of salmon, in slices
Dispositif pour découper des matières de coupe de préférence des morceaux de viande, notamment les parties latérales du saumon en tranches

(30) Priorität: 09.03.1990 DE 4007503
(43) Veröffentlichungstag der Anmeldung: 11.09.1991
(73) Patentinhaber: Schmidt, Hans-Joachim, D-49593 Bersenbrück (DE)
(72) Erfinder: Schmidt, Hans-Joachim, D-49593 Bersenbrück (DE)
(74) Vertreter: Alber, Norbert

(56) Entgegenhaltungen:
- DE-A- 2 830 588
- FR-A- 2 446 600
- US-A- 4 429 784
- US-A- 4 557 019

## Beschreibung

Die Erfindung betrifft eine Vorrichtung zum Zerlegen von Schneidgut, vorzugsweise Fleischstücken, insbesondere Lachsseiten, in Scheiben, mit einer Schneidestation und mit einer das Schneidgut durch die Schneidestation führenden ein Bahnelement mit Schneidgutauflagefläche umfassenden Transporteinrichtung.

Lachsseiten werden, um großflächige Scheiben zu erhalten, schräg in etwa papierdünne Scheiben geschnitten. Der aufgeschnittene Lachs wird servierfertig verpackt und in den Handel gebracht. Die fabrikmäßige Verarbeitung von insbesondere Lachsseiten erfordert Vorrichtungen, die in der Lage sind, das Aufschneiden großer Mengen von Lachsseiten in dünne Scheiben zu ermöglichen. Es sind Vorrichtungen bekannt, die mit rotierenden Messern arbeiten. Mit rotierenden Messern arbeitende Vorrichtungen haben zwar den Vorteil, daß eine Einstellung der Dicke der einzelnen Scheiben möglich ist. Das zarte und empfindliche Fleisch der Lachse erfordert aufgrund des ziehenden Schnittes der rotierenden Messer jedoch ein Schneiden in gefrostetem Zustand. Ein bekanntermaßen schädliches mehrfaches Einfrieren des Fleisches innerhalb der fabrikmäßigen Verarbeitung ist damit unumgänglich. Durch das Einfrieren des Schneidgutes werden im Schneidgut relativ große Eiskristalle erzeugt und das Eiweiß zerstört. Das Schneidgut, Fisch oder Fleisch, wird matschig und erfordert ein Zwischenlegen von Papier zwischen die einzelnen Scheiben, damit die Scheiben nicht miteinander verkleben.

Es ist eine Vorrichtung der vorbezeichneten Gattung bekannt, mit der Schneidgut, insbesondere Lachsseiten, auch im frischen nicht gefrosteten Zustand geschnitten werden kann. Die bekannte Vorrichtung arbeitet mit einem aus parallel zueinanderstehenden Messerblättern bestehenden Schneidgatter, welches zur Erzeugung schräger Schnitte insgesamt schräg steht und zur Erzeugung der Schneidbewegung auf- und abbewegt wird. Eine Lachsseite wird durch das sich bewegende Schneidgatter geführt und in Einzelscheiben zerlegt. Die bekannte Vorrichtung hat zwar den Vorteil, daß ungefrostetes Schneidgut geschnitten werden kann. Nachteilig ist es jedoch, daß die Dicke der geschnittenen Scheiben nicht einstellbar ist, denn diese ist durch den Abstand zwischen den einzelnen, parallel zueinander stehenden Messerblättern des Schneidgatters vorbestimmt. Schnittwinkel und Schnittstärke sind somit nicht veränderbar. Nachteilig sind bei dem auf- und abbewegten Schneidgatter auch durch die eng benachbarten Messerblätter verstärkt auftretende Schmier- und Klebeeffekte. Außerdem ist es mit Schwierigkeiten verbunden, die aufgeschnittenen Scheiben auf eine für den Versand und die Verpackung notwendige Platte zu manövrieren, was insbesondere bei der Verarbeitung von Schneidgut, wie Lachs o.dgl. in fabrikmäßigem Maßstab zweckmäßig ist, da sich die dünnen Scheiben nur schwer handhaben lassen.

Der Erfindung liegt die Aufgabe zugrunde, eine Vorrichtung zu schaffen, mit der sich insbesondere Lachsseiten mit beliebiger Schnittstärke im weichen ungefrosteten Zustand schneiden lassen.

Diese Aufgabe ist erfindungsgemäß dadurch gelöst, daß die Schneidgutauflagefläche aus zueinander benachbart angeordneten Bahnabschnitten gebildet ist, wobei eine vorbestimmte Anzahl von Bahnabschnitten als gegenüber benachbarten Bahnabschnitten mittels eines Antriebsorgans schrittweise bewegliche Schneidgutmitnehmer ausgebildet sind, daß die Schneidestation ein sich quer über das Bahnelement erstreckendes Schneidmesser umfaßt, und daß das Schneidmesser längs einer gegen die Schneidgutauflagefläche gerichteten und in einem vorbestimmten Winkel gegen das Bahnelement geneigten Führung bewegbar ist.

Mittels der schrittweise beweglichen Schneidgutmitnehmer kann das auf dem Bahnelement liegende Schneidgut schrittweise durch die Schneidstation geführt werden. Durch eine Veränderung der Schrittweite läßt sich dabei die Schnittstärke der Vorrichtung verändern, so daß auf einfachste Weise die Dicke der einzelnen Scheiben, in die das Schneidgut zerlegt wird, einstellbar ist. Zwischen jedem einzelnen Schritt, mit dem das Schneidgut durch die Schneidstation geführt wird, kann in der Schneidstation eine Scheibe geschnitten werden. Die Aufteilung der Schneidgut auflagefläche des Bahnelementes der Transporteinrichtung in feststehende und bewegliche Bahnabschnitte hat den Vorteil, daß die beweglichen Bahnabschnitte sich durch das Antriebsorgan ähnlich einem sogenannten "Pilgerschritt" bewegen lassen. Dazu ist vorgesehen, daß das Antriebsorgan Elemente für einen Vertikalantrieb und für einen Horizontalantrieb der beweglichen Bahnabschnitte umfaßt. Die beweglichen Bahnabschnitte können durch den Vertikalantrieb so angehoben werden, daß das Schneidgut auf ihnen ruht. Durch den Horizontalantrieb wird der bewegliche Bahnabschnitt zusammen mit dem darauf ruhenden Schneidgut in Richtung der Schneidstation bewegt, wobei der Horizontalantrieb so eingestellt ist, daß die Bewegung lediglich über einen Schritt vorbestimmter und eingestellter Weite erfolgt. Der Vertikalantrieb setzt dann umgekehrt wieder ein und senkt die beweglichen Bahnabschnitte ab, so daß nunmehr das Schneidgut auf den feststehenden Bahnabschnitten liegt. Dabei kann geschnitten werden. Gleichzeitig, zweckmäßigerweise jedoch danach, werden die beweglichen Bahnabschnitte in der abgesenkten Position um die vorgesehene Schrittweite wieder zurückbewegt und dann erneut angehoben, um das Schneidgut um einen weiteren Schritt vorzuschieben. Ein weiterer Schnitt erzeugt die vom Schneidgut abgetrennte Scheibe. Bei mehrfacher, rascher Folge von Schrittbewegungen und Schnitten wird eine Lachsseite vollständig in Scheiben gewünschter Dicke zerlegt.

Die "Pilgerschrittbewegung" der beweglichen Bahnabschnitte ist konstruktiv recht einfach durch Arbeitszylinder zu verwirklichen, die einmal vertikal als Elemente für einen Vertikalantrieb dienen und zum anderen horizontal als Elemente eines Horizontalantriebes. Für ein Antriebsorgan werden nur wenige Arbeitszylinder benötigt, wenn mit besonderem Vorteil mehrere bewegliche Bahnabschnitte durch verbindende Brückenglieder miteinander gekoppelt sind, wobei die Arbeitszylinder dann an den Brückengliedern angreifen. In den Verschiebeweg, insbesondere des dem Horizontalantriebes dienenden Arbeitszylinders, können zur Einstellung der Schrittweite zum Beispiel entsprechende Endanschläge vorstehen, die den Verschiebeweg begrenzen. Wird der Abstand zwischen den Anschlägen verändert, kann dadurch auch die Schnittstärke verändert werden.

Mit besonderem Vorteil ist jeder Bahnabschnitt eine sich über die Länge des Bahnabschnittes erstreckende Leiste. Bewegliche Leisten und feststehende Leisten sind alternierend nebeneinander und parallel zueinander verlaufend angeordnet mit dem Vorteil, daß sie sich gegenseitig führen. Dabei können der Transporteinrichtung Abmessungen gegeben werden, die es erlauben, beispielsweise mehrere Lachsseiten sowohl nebeneinander als auch hintereinander anzuordnen und fortlaufend durch die Schneidstation zu führen. Nebeneinander auf der Schneidgutauflagefläche liegende Lachsseiten können dann mit Vorteil gleichzeitig mit jeweils einem Schnitt nach jedem Schritt geschnitten werden. Die Verwendung von Leisten für die Bahnabschnitte hat insbesondere auch für die beweglichen Bahnabschnitte den Vorteil, daß der Bauaufwand für die Antriebsorgane der Leisten und ihre Führung auf ein Minimum reduzierbar ist.

Damit die beweglichen Bahnabschnitte das aufliegende Schneidgut möglichst ohne Schlupf mitnehmen können, da von der Schrittbewegung der beweglichen Bahnabschnitte die Schnittstärke der aufzuschneidenden Scheiben abhängt, ist vorgesehen, daß die etwa in der Ebene der Schneidgutauflagefläche liegende Oberseite der beweglichen Bahnabschnitte mit vorstehenden Mitnehmern ausgerüstet sind. Vorzugsweise werden als Mitnehmer Nadeln verwendet, die in das aufliegende Schneidgut von unten einstechen und aufgrund ihrer geringen Abmessungen keine Einstichspuren im Schneidgut hinterlassen.

Die Schneidestation umfaßt ein sich quer über das Bahnelement erstreckendes Schneidmesser, das längs einer gegen die Schneidgutauflagefläche gerichteten Führung bewegbar ist. Das Schneidmesser der Schneidestation kann mittels geeigneten Antrieb längs der Führungen taktweise auf- und abbewegt werden. Die Führungen sind zweckmäßigerweise beiderseits des Bahnelementes angeordnet und halten das Schneidmesser, das sich von Führung zu Führung wie eine Brücke über das Transportelement erstreckt. Bei jeder abwärts gerichteten Bewegung gegen die Schneidgutauflagefläche der Transportbahn führt das Schneidmesser über die gesamte Breite des Bahnelementes einen Schnitt aus, wenn sich im Schneidweg des Schneidmessers längs der Führungen Schneidgut befindet.

Damit das Schneidmesser bei seiner Abwärtsbewegung längs der Führungen das Schneidgut vollständig durchtrennen kann, weist die Schneidgutauflagefläche des Bahnelementes im durch das Ende der Führung bestimmten Bereich eine durch sämtliche Bahnabschnitte verlaufende vertiefte Querrille auf. In diese Querrille kann das Schneidmesser eintauchen, wenn es in die tiefste Stellung am unteren Ende der Führungen bewegt ist.

Zur Erleichterung des Schneidens, insbesondere bei empfindlichem Schneidgut, wie Lachsseiten` zeichnet sich die Vorrichtung dadurch aus, daß das Schneidmesser zwei oszillierend angetriebene, aneinanderliegende Messerblätter aufweist. Die Schneiden der Messerblätter sind vorzugsweise mit einem Wellenschliff versehen. Antriebe, die Schneidmesser oszillierend bewegen, sind an einem Ende der Schneidmesser anbringbar und bilden einen Antriebskopf, der zusammen mit den Schneidmessern entlang den Führungen hin- und herbewegt werden kann. Für die Bewegung des Antriebskopfes mit Schneidmesser entlang der Führungen können Arbeitszylinder verwendet werden.

Vorzugsweise sind die Führungen in einem vorbestimmten Winkel gegen das Bahnelement geneigt. Durch diesen Winkel kann der Schnittwinkel bestimmt werden. Es ist möglich, zur Veränderung des Schnittwinkels den Neigungswinkel der Führungen gegenüber dem Bahnelement entsprechend einzustellen. Eine bevorzugte Ausbildung der Vorrichtung sieht vor, daß sie eine Einrichtung zur Einstellung des Gefälles bzw. der Steigung des Bahnelementes gegenüber der Horizontalen aufweist. Bei unveränderter Ausrichtung der Führungen kann der Schnittwinkel dabei durch eine Änderung der Neigung des gesamten Bahnelementes eingestellt werden. Vorzugsweise fördert das Bahnelement leicht nach unten geneigt durch die Schneidestation, wobei die Führungen ebenfalls nach unten in der Richtung geneigt sind, in der das Schneidgut durch die Schneidestation gefördert wird. Damit die Schneidergebnisse auch bei Einstellung verschiedener Schneidwinkel stets gleich bleiben, zeichnet sich die Vorrichtung in vorteilhafter Weise dadurch aus, daß die Achse, um die das Bahnelement zur Verstellung seines Gefälles bzw. Steigung schwenkbar ist, in derjenigen Linie liegt, welche durch die Schneide des Schneidmessers in seiner tiefsten Stellung zum Bahnelement beschrieben ist. Durch entsprechende Anlenkungen und Feststellmittel für das Bahnelement an der Vorrichtung kann die Schwenkung des Bahnelementes um diese Achse erfolgen, um Schnittwinkel zu verändern. In Verbindung mit einer Veränderung der Schrittweite lassen sich mit der erfindungegemäßen Vorrichtung somit beliebig dicke Scheiben mit beliebigem Neigungswinkel schneiden, und zwar mit ganz besonderem Vorteil auch aus nicht gefrostetem Fleisch. Beim Aufschneiden von Lachsseiten ist das Zwischenlegen von Papier nicht mehr erforderlich und die einzelnen Scheiben der aufgeschnittenen Lachsseiten lassen sich am Ende der Transporteinrichtung durch überführen problemlos auf Platten, Tabletts o.dgl. ablegen, um einer Weiterverarbeitung zugeführt zu werden.

Selbstverständlich kann mit der erfindungsgemäßen Vorrichtung auch Filetfleisch von anderen Fischen, aber auch von Geflügel, Wild u.dgl. geschnitten werden.

Ein Ausführungsbeispiel, aus dem sich weitere erfinderische Merkmale ergeben, ist in der Zeichnung dargestellt. Es zeigen:
- Fig. 1: eine Gesamtansicht der Vorrichtung,
- Fig. 2: eine schematische Ansicht der Transporteinrichtung und der Schneidestation der Vorrichtung gemäß Fig. 1 und
- Fig. 3: eine schematische Ansicht einiger Bahnabschnitte des Bahnelementes der Transporteinrichtung in Verbindung mit einer Teilansicht der Schneidmesser der Schneidestation in vergrößerndem Maßstab.

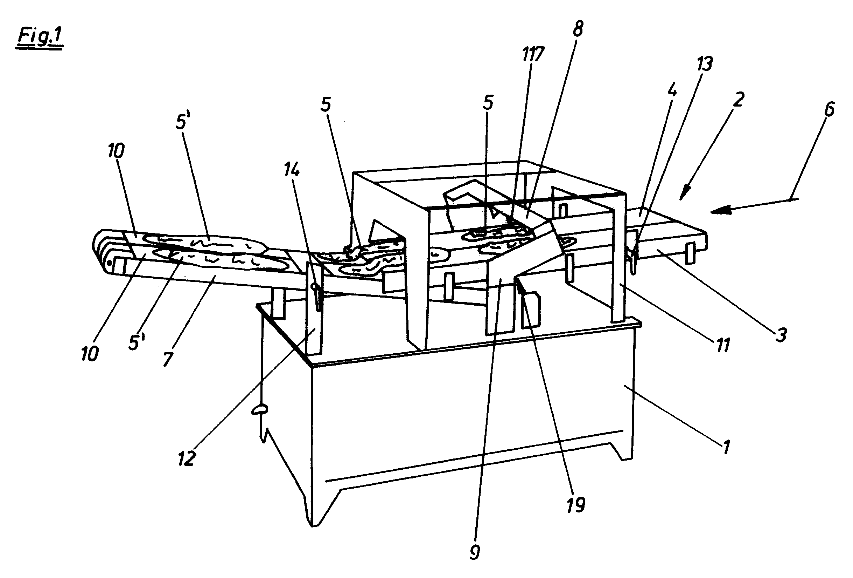

Fig. 1 zeigt eine Gesamtansicht der Vorrichtung. Auf einem kastenförmigen Grundgestell 1 befindet sich eine Transporteinrichtung 2, die ein Bahnelement 3 umfaßt. Die Oberseite des Bahnelementes 3 dient als Schneidgutauflagefläche 4. Das Schneidgut ist auf den über das Grundgestell 1 hinausragenden Teil der Transporteinrichtung 2 auflegbar. Die Transporteinrichtung fördert das aufgelegte Schneidgut, hier angedeutete Lachsseiten 5, in Richtung des Pfeils 6 zu einem abfördernden Förderband 7. Quer über das Bahnelement 3 der Transporteinrichtung 2 erstreckt sich ein Schneidmesser 117 tragender Brückenbügel 8 einer Schneidestation 19. Der die Schneidmesser 117 tragende Brückenbügel 8 ist längs beiderseits des Bahnelementes angeordneten Führungen 9 hin- und herverschiebbar. Die Führungen sind, wie dargestellt, nach unten geneigt, so daß der Brückenbügel 8 die darin gehaltenen Schneidmesser 117 gegen die Schneidgutauflagefläche 4 des Bahnelementes 3 der Transporteinrichtung 2 führt. Die Schneidmesser 117 zerlegen das Schneidgut (Lachsseite 5) dabei in eine Scheibe, durch zwei nacheinander erfolgende Schnitte, wobei zwischen den einzelnen Schnitten die Schnittstärke durch einen Bewegungsschritt bestimmt wird, mit welchem das Schneidgut von der Transporteinrichtung 2 in Richtung des Pfeils 6 durch die Schneidestation 19 befördert wird. Bei entsprechender Wiederholung des Ablaufs von Transportschritten und Schneidbewegungen der Schneidmesser entlang der Führungen 9, wird das Schneidgut nacheinander in rascher Folge in Scheiben zerschnitten. Am Ende der Transportbahn 2 laufen auf dem Förderband 7 aufgelegte Platten 10 zu, auf welche das geschnittene Schneidgut, hier Lachsseiten 5, abgelegt und abgefördert wird, wie es ganz links am Ende des Abförderbandes sichtbar ist. Dort befinden sich zwei geschnittene Lachsseiten 5' jeweils auf einer Platte 10. Das Förderband 7 kann als einfacher Gurtförderer ausgebildet sein, dessen Fördergeschwindigkeit der Zufuhrgeschwindigkeit der Transporteinrichtung 2 angepaßt ist.

An den sich vom Grundgestell 1 erhebenden Stützen 11 und 12 sind Stelleinrichtungen 13 und 14 vorgesehen, mit denen die Neigung sowohl des Bahnelementes 3 als auch des Förderbandes 7 eingestellt werden kann. Durch Veränderung der Neigung des Bahnelementes 3 läßt sich auch Einfluß auf den Schnittwinkel nehmen.

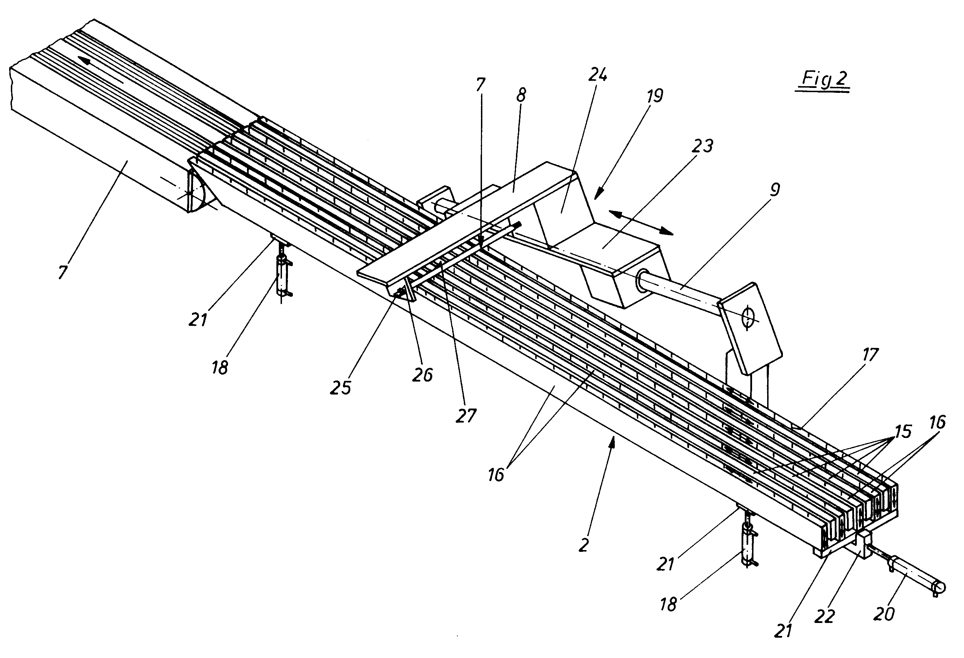

Fig. 2 zeigt eine schematische Ansicht der Transporteinrichtung 2 der Vorrichtung sowie der zugeordneten Schneidestation 19. Das Förderband ist wieder mit 7 bezeichnet und wird hier nicht naher erläutert. Die Transporteinrichtung 2 umfaßt das Bahnelement, welches, wie dargestellt, aus feststehenden Bahnabschnitten 15 und beweglichen Bahnabschnitten 16 besteht. Jeder Bahnabschnitt 15,16 ist, wie hier dargestellt, eine Leiste, die sich über die gesamte Länge des Bahnelementes der Transporteinrichtung 2 erstreckt. Die der Schneidgutauflagefläche des Bahnelementes entsprechenden Oberflächen der beweglichen Bahnabschnitte 16 sind mit vorstehenden Nadeln 17 versehen, die als Schneidgutmitnehmer dienen. Als Antriebsorgane für die beweglichen Bahnabschnitte 16 sind Elemente für einen Vertikalantrieb 18 vorgesehen, sowie ein Element für einen Horizontalantrieb 20. Die Elemente 18 und 20 sind, wie hier dargestellt, Arbeitszylinder. Die beweglichen Bahnabschnitte 16 sind sämtlich durch untere Querträger 21 miteinander verbunden, so daß die Vertikalantriebselemente 18 an diesen Verbindungen angreifen und somit nur Wenige Arbeitszylinder erforderlich sind, um sämtliche beweglichen Bahnabschnitte 16 gleichzeitig auf- und abbewegen zu können.

Das Element für den Horizontalantrieb 20 ist ebenfalls ein Arbeitszylinder, der, wie dargestellt, an einer Gabel 22 angreift, in deren Gabelmaul wiederum der Querträger 21 auf- und abbeweglich geführt ist. Das Horizontalantriebselement 20 kann die beweglichen Bahnabschnitte 16 zusammen hin- und herbewegen. Bei entsprechender Ansteuerung der Vertikalantriebselemente und des Horizontalantriebselementes lassen sich die beweglichen Bahnabschnitte 16 ähnlich einem sogenannten "Pilgerschritt" bewegen. Liegt Schneidgut auf der Oberseite der Transporteinrichtung auf, so können durch Absenken der Vertikalantriebselemente 18 zunächst die beweglichen Bahnabschnitte 16 nach unten abgesenkt werden. Dadurch liegt das Schneidgut dann nur noch auf den feststehenden Bahnabschnitten 15 auf. In dieser abgesenkten Stellung werden die beweglichen Bahnabschnitte 16 durch Zurückziehen der Kolbenstange des als Horizontalantrieb 20 dienenden Arbeitszylinders um einen vorbestimmten Schritt zurückgezogen. Anschließend werden die Vertikalantriebselemente 18 wieder ausgefahren, so daß sich die beweglichen Bahnabschnitte 16 soweit anheben, daß sie wieder an die Unterseite des Schneidguts anschlagen. Dabei dringen die Nadeln 17 in das Schneidgut ein. Wird nunmehr die Kolbenstange des als Horizontalantriebs 20 dienenden Arbeitszylinders um ein vorbestimmbares und einstellbares Maß ausgefahren, bewegen sich die beweglichen Abschnitte wieder in die Position, in der sie am Ende des Bewegungsschritts wieder abzusenken sind. Dabei wird das Schneidgut um den vorbestimmten Schritt mitbewegt und somit auch schrittweise durch die Schneidestation 19 geführt. Die Schneidestation umfaßt eine geneigte Führung 9, die hier zwecks Vereinfachung der Darstellung als Rundstange ausgebildet ist. An dieser Führung gleitet ein Kopf 23 hin und her, indem er zum Beispiel über einen hier nicht weiter dargestellten Arbeitszylinder bewegt wird. Der Kopf trägt hier schematisch angedeutete Antriebselemente 24 sowie den Brückenbügel 8, der wiederum ein sich zwischen Kopf 24 und Ende des Brückenbügels 8 erstreckendes Schneidmesser 117 trägt. Das Schneidmesser 117 besteht aus zwei aneinanderliegenden in ihrer Längsrichtung oszillierend angetriebenen Messerblättern 25 und 26, die mit ihren Schneiden 27 parallel zur Führung 9 bewegbar sind und dabei in das von der Transporteinrichtung 2 schrittweise herangeführte Schneidgut eindringen können, sobald die größtmögliche Annäherung der Schneidmesser an die Schneidgutauflagefläche der Transporteinrichtung 2 erreicht ist, d.h., der Kopf 24 ist entlang der Führung 9 weitestmöglich nach unten gefahren.

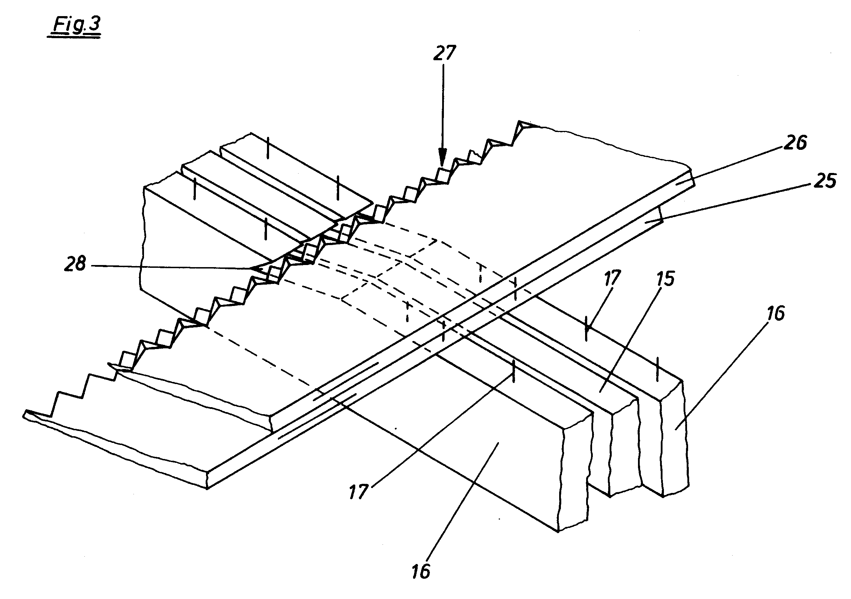

Fig. 3 zeigt eine Ansicht eines Ausschnittes aus Fig. 2 in vergrößerndem Maßstab. Beiderseits eines feststehenden Bahnabschnittes 15 befinden sich zwei bewegliche Bahnabschnitte 16, die mit vorstehenden Nadeln 17 ausgerüstet sind. Die Messerblätter sind wieder mit 25 und 26 bezeichnet. An der Schneidseite sind die Messerblätter 25 und 26 mit einem Wellenschliff versehen, wie es hier dargestellt ist.

Fig. 3 verdeutlicht, daß die Schneidgutauflagefläche des Bahnelementes im durch das Ende der Führung bestimmten Bereich eine durch sämtliche Bahnabschnitte 15 und 16 verlaufende vertiefte Querrille 28 aufweist. In diese Querrille können die Schneiden 27 der Messerblätter 25,26 bei Erreichen des untersten Endes der Führung eintauchen und somit das Schneidgut vollständig durchtrennen. Wie dargestellt, ist die Querrille 28 keilförmig ausgebildet, damit ein Einfahren in die Querrille in einem bestimmten Schnittwinkel schräg zur Schneidgutauflagefläche möglich ist.

## Patentansprüche

1. Vorrichtung zum Zerlegen von Schneidgut, vorzugsweise Fleischstücken, insbesondere Lachsseiten, in Scheiben, mit einer Schneidestation und mit einer das Schneidgut durch die Schneidestation führenden, ein Bahnelement mit Schneidgutauflagefläche umfassenden Transporteinrichtung,
dadurch gekennzeichnet,
daß die Schneidgutauflagefläche (4) aus zueinander benachbart angeordneten Bahnabschnitten (15,16) gebildet ist, wobei eine vorbestimmte Anzahl von Bahnabschnitten (16) als gegenüber benachbarten Bahnabschnitten (15) mittels eines Antriebsorgans schrittweise bewegliche Schneidgutmitnehmer ausgebildet sind,
daß die Schneidestation (19) ein sich quer über das Bahnelement (3) erstreckendes Schneidmesser (117) umfaßt, und daß das Schneidmesser (117) längs einer gegen die Schneidgutauflagefläche (4) gerichteten und in einem vorbestimmten Winkel gegen das Bahnelement (3) geneigten Führung (9) bewegbar ist.

2. Vorrichtung nach Anspruch 1, dadurch gekennzeichnet, daß das Antriebsorgan Elemente für einen Vertikalantrieb (18) und für einen Horizontalantrieb (20) der beweglichen Bahnabschnitte (16) umfaßt.

3. Vorrichtung nach einem der Ansprüche 1 und 2, dadurch gekennzeichnet, daß jeder Bahnabschnitt (15,16) eine sich über die Länge des Bahnelementes (3) erstreckende Leiste ist.

4. Vorrichtung nach einem der Ansprüche 1 bis 3, dadurch gekennzeichnet, daß die etwa in der Ebene der Schneidgutauflagefläche (4) liegenden Oberseiten der beweglichen Bahnabschnitte (16) mit vorstehenden Mitnehmern ausgerüstet sind.

5. Vorrichtung nach Anspruch 4, dadurch gekennzeichnet, daß die Mitnehmer Nadeln (17) sind.

6. Vorrichtung nach einem der vorhergehenden Ansprüche, dadurch gekennzeichnet, daß die Schneidgutauflagefläche (4) des Bahnelementes (3) im durch das Ende der Führung (9) bestimmten Bereich eine durch sämtliche Bahnabschnitte (15,16) verlaufende, vertiefte Querrille (28) aufweist.

7. Vorrichtung nach einem der vorhergehenden Ansprüche, dadurch gekennzeichnet, daß das Schneidmesser (117) zwei oszillierend angetriebene, aneinanderliegende Messerblätter (25,26) aufweist.

8. Vorrichtung nach einem der vorhergehenden Ansprüche, dadurch gekennzeichnet, daß sie eine Einrichtung zur Einstellung des Gefälles bzw. der Steigung des Bahnelementes (3) gegenüber der Horizontalen aufweist.

9. Vorrichtung nach Anspruch 8, dadurch gekennzeichnet, daß die Achse, um die das Bahnelement (3) zur Verstellung seines Gefälles bzw. Steigung schwenkbar ist, in derjenigen Linie liegt, welche durch die Schneide (27) des Schneidmessers (117) in seiner tiefsten Stellung zum Bahnelement (3) beschrieben ist.

## Claims

1. A device for carving into slices material to be cut, preferably pieces of meat, in particular sides of salmon, having a cutting station and having a conveying device which guides the material to be cut through the cutting station and which comprises a track element with a support surface for the material to be cut,
characterised in that the support surface (4) for the material to be cut is formed from track portions (15, 16) arranged adjacent to one another, a predetermined number of track portions (16) being in the form of entrainment means for the material to be cut which are movable in a step-like manner in relation to adjacent track portions (15) by means of a driving member, in that the cutting station (19) comprises a cutting knife (117) extending transversely over the track element (3), and in that the cutting knife (117) is movable along a guiding device (9) which is directed towards the support surface (4) for the material to be cut and inclined towards the track element (3) at a predetermined angle.

2. A device in accordance with Claim 1, characterised in that the driving member comprises elements for a vertical drive (18) and for a horizontal drive (20) of the movable track portions (16).

3. A device in accordance with either one of Claims 1 and 2, characterised in that each track portion (15, 16) is a strip extending over the length of the track element (3).

4. A device in accordance with any one of Claims 1 to 3, characterised in that the upper sides, lying substantially in the plane of the support surface (4) for the material to be cut, of the movable track portions (16) are equipped with projecting entrainment means.

5. A device in accordance with Claim 4, characterised in that the entrainment means are pins (17).

6. A device in accordance with any one of the preceding Claims, characterised in that the material support surface (4) of the track element (3) has, in the region determined by the end of the guiding device (9), a recessed transverse groove (28) running through all of the track portions (15, 16).

7. A device in accordance with any one of the preceding Claims, characterised in that the cutting knife (117) has two knife blades (25, 26) lying against one another and driven so as to oscillate.

8. A device in accordance with any one of the preceding Claims, characterised in that it has a device for adjusting the slope or the inclination of the track element (3) to the horizontal.

9. A device in accordance with Claim 8, characterised in that the axis about which the track element (3) is pivotable so as to adjust its slope or inclination, lies in that line described by the cutting edge (27) of the cutting knife (117) in its lowest position relative to the track element (3).

## Revendications

1. Dispositif destiné à trancher un produit à couper, de préférence des morceaux de viande ou de chair, en particulier des filets de saumon, comportant un poste de tranchage ainsi qu' un dispositif de transport comportant un élément de voie avec une surface d'appui du produit à couper, guidant le produit à couper à travers le poste de tranchage, caractérisé en ce que la surface d'appui (4) du produit à couper est constituée de portions de voie (15, 16) voisines les unes des autres, un nombre prédéterminé de portions de voie (16) étant configuré sous la forme d'entraîneurs du produit à couper déplaçables pas à pas par rapport à des portions de voie (15) voisines, au moyen d'un organe d'entraînement, en ce que le poste de tranchage (19) comporte un couteau (117) s'étendant transversalement sur l'élément de voie (3) et en ce que le couteau (117) est déplaçable le long d'un dispositif de guidage (9) orienté vers la surface d'appui (4) du produit à couper et incliné sous un angle prédéterminé par rapport à l'élément de voie (3).

2. Dispositif selon la revendication 1, caractérisé en ce que l'organe d'entraînement comporte des éléments pour un entraînement vertical (18) et pour un entraînement horizontal (20) des portions de voie (16) mobiles.

3. Dispositif selon l'une des revendications 1 et 2, caractérisé en ce que chaque portion de voie (15, 16) est une barre s'étendant sur la longueur de l'élément de voie (3).

4. Dispositif selon l'une des revendications 1 à 3, caractérisé en ce que les faces supérieures, situées à peu près dans le plan de la surface d'appui (4) du produit à couper, sont équipées d'entraîneurs saillants.

5. Dispositif selon la revendication 4, caractérisé en ce que les entraîneurs sont des aiguilles (17).

6. Dispositif selon l'une des revendications précédentes, caractérisé en ce que la surface d'appui (4) du produit à couper de l'élément de voie (3) présente, dans la zone définie par l'extrémité de l'organe de guidage (9), une gorge transversale (28) encastrée, s'étendant à travers toutes les portions de voie (15, 16).

7. Dispositif selon l'une des revendications précédentes, caractérisé en ce que le couteau (117) comporte deux lames (25, 26) juxtaposées entraînées en oscillation.

8. Dispositif selon l'une des revendications précédentes, caractérisé en ce qu'il comporte un dispositif de réglage de l'inclinaison vers le bas ou vers le haut de l'élément de voie (3) par rapport à l'horizontale.

9. Dispositif selon la revendication 8, caractérisé en ce que l'axe autour duquel l'élément de voie (3) peut pivoter en vue du réglage de son inclinaison vers le bas ou vers le haut, se situe dans la ligne qui est décrite par le tranchant (27) du couteau (117) dans sa position la plus basse par rapport à l'élément de voie (3).
